**Europäisches Patentamt**

**European Patent Office**

**Office européen des brevets**

(19)

(11) Numéro de publication : **0 302 098 B1**

(12)

# FASCICULE DE BREVET EUROPEEN

(45) Date de publication du fascicule du brevet :
**13.05.92 Bulletin 92/20**

(51) Int. Cl.$^5$ : **B62K 25/24,** B60B 1/00,
B62M 17/00

(21) Numéro de dépôt : **88901853.7**

(22) Date de dépôt : **09.02.88**

(86) Numéro de dépôt international :
**PCT/FR88/00073**

(87) Numéro de publication internationale :
**WO 88/05743 11.08.88 Gazette 88/18**

(54) **Motocyclette.**

(30) Priorité : **09.02.87 FR 8701675**
**04.03.87 FR 8703018**
**12.11.87 FR 8715818**

(43) Date de publication de la demande :
**08.02.89 Bulletin 89/06**

(45) Mention de la délivrance du brevet :
**13.05.92 Bulletin 92/20**

(84) Etats contractants désignés :
**AT BE CH DE FR GB IT LI LU NL SE**

(56) Documents cités :
**EP-A- 168 273**
**DE-A- 2 340 050**
**FR-A- 2 533 523**
**FR-A- 2 579 950**
**GB-A- 2 121 364**

(73) Titulaire : **SAVARD, Frank Jean**
**2, rue de Launay**
**F-22360 Langueux (FR)**
Titulaire : **SAVARD, Patrick André**
**2, rue de Launay**
**F-22360 Langueux (FR)**

(72) Inventeur : **SAVARD, Frank Jean**
**2, rue de Launay**
**F-22360 Langueux (FR)**
Inventeur : **SAVARD, Patrick André**
**2, rue de Launay**
**F-22360 Langueux (FR)**

(74) Mandataire : **Moncheny, Michel et al**
**c/o Cabinet Lavoix 2 Place d'Estienne d'Orves**
**F-75441 Paris Cedex 09 (FR)**

EP 0 302 098 B1

## Description

Motocyclette à deux roues avant et arrière montées chacune sur un bras oscillant (18, 16), notamment à deux roues motrices, comportant un bâti rigide (14) formant cadre, supportant un ensemble de direction (48) avec une colonne de direction (58), et un moteur d'entraînement (12) ainsi qu'une fourche avant (50) caractérisée en ce qu'elle comprend un moyeu (53) directionnel comportant un moyeu extérieur (82) et un moyeu intérieur (88) dont les flancs (110) reçoivent l'extrémité inférieure de la fourche (50), ce moyeu intérieur étant orientable autour d'un axe de direction (108) parallèle à un des diamètres de ce moyeu et porté par un pivot (104) décentré et solidaire d'un axe de pivotement (98) horizontal orienté perpendiculairement à la direction de déplacement, passant à travers une lumière traversante (94) ménagée dans ce moyeu intérieur, cet axe de pivotement étant monté à rotation aux extrémités du bras oscillant avant (18).

La présente invention a pour objet une motocyclette à moyeu directionnel notamment pour motocyclette à deux roues motrices.

On connaît déjà des motocyclettes notamment du type à deux roues dont les roues avant et arrière sont motrices, cf FR-A-2 545 059. Ces motocyclettes comportent un moteur portant un cadre et deux bras oscillants doubles supportant les roues avant et arrière. Généralement, un dispositif amortisseur est disposé entre le moteur et chacun des bras oscillants de façon à amortir les déplacements de chacune des roues par rapport au cadre et au moteur.

Les solutions apportées quant à la transmission vers les roues sont basées sur le principe d'un arbre muni de deux articulations à la cardan, l'une d'entre elles étant en prise directe sur l'arbre de sortie moteur et l'autre entraînant le moyeu mobile de la roue. Il s'est avéré que cette solution n'est pas fiable dans le temps car les articulations à la cardan sont soumises à un grand nombre de mouvements dans des plans différents dûs au fait que la roue avant notamment, en plus d'être entraînée en rotation, est directrice, et que de plus, il est nécessaire d'ajouter un renvoi d'angle. On comprend par ailleurs que le fait de surdimensioner ces différentes pièces est préjudiciable à la maniabilité de la motocyclette par accroissement du poids. Un autre inconvénient des motocyclettes existantes vient du fait que la chasse et l'angle de chasse sont définis initialement pour un modèle donné et ne peuvent être modifiés ou adaptés en fonction des besoins.

On connaît la demande de brevet français FR-A-2 579 950 qui décrit une motocyclette avec fourche télescopique dont la roue avant est motrice et directrice. La transmission est réalisée à partir d'arbres et de pignons droits, coniques et à surface courbe, le centre de l'arc de courbe étant coaxial avec l'axe de direction.

Le mécanisme est d'une grande complexité avec des pertes de rendement importantes et ne présente pas une fiabilité de fonctionement que ce soit sur route ou en terrain naturel car les pignons travaillent à sec sans possibilité de mise sous carter.

En ce qui concerne l'entraînement de la roue avant, on se reportera à la demande de brevet divisionnaire N° 91 104403.0 du 21.03.1991 qui décrit des montages avec jambe de force qui utilisent le présent moyeu directionnel.

La présente invention a pour objet une motocyclette qui pallie les inconvénients que présentent les véhicules de l'art antérieur et propose un moyeu directionel qui permet l'entraînement de la roue avant, qui préférablement permet un réglage de la chasse et de l'angle de chasse, qui ne requiert aucun tendeur sur la transmission avant.

La motocyclette selon l'invention, à deux roues motrices avant et arrière montées chacune sur un bras oscillant, peut comprendre un bâti rigide formant cadre et supportant un ensemble de direction avec une colonne de direction, et un moteur ainsi qu'une fourche avant et se caractérise en ce qu'elle comprend un moyeu directionel comportant un moyeu extérieur et un moyeu intérieur dont les flancs reçoivent l'extrémité inférieure de la fourche, ce moyeu intérieur étant orientable autour d'un axe de direction parallèle à un des diamètres de ce moyeu et porté par un pivot décentré solidaire d'un axe de pivotement horizontal orienté perpendiculaire-ment à la direction de déplacement, passant à travers une lumière traversante ménagée dans ce moyeu intérieur, cet axe de pivotement étant monté à rotation aux extrémités du bras oscillant avant. Ce moyeu intérieur est muni d'au moins deux alésages traversants parallèles à un des diamètres de ce moyeu pour que l'axe de direction prenne des positions variables par rapport à l'axe de rotation C de la roue de façon à régler la chasse.

Selon un mode de réalisation particulier de l'invention, l'axe de pivotement est monté à rotation par rapport au bras oscillant avant grâce à des roulements. De plus, les flancs du moyeu intérieur comportent une série d'alésages destinés à recevoir l'extrémité de la fourche, l'axe de la colonne de direction et l'axe de direction étant sensiblement parallèles.

Selon une caractéristique particilière de l'invention, le moyeu intérieur peut porter les cages intérieures de deux roulements à billes annulaires et les cages extérieures de ces roulements portent le moyeu extérieur.

Ce moyeu extérieur, selon un mode de réalisation particulier, est constitué de deux flasques annulaires symétriques par rapport au plan vertical passant par l'axe de direction et par l'axe de rotation C de la roue, ces deux flasques étant réliés entre eux par des vis.

Selon une variante de l'invention, le bâti rigide comprend des tubes agencés pour former deux trapèzes avant et arrière coopérant entre eux par un sommet, deux des sommets de chaque trapèze étant fixés au moteur et le dernier sommet du trapèze avant supportant la colonne de direction. De plus, la fourche de la colonne de direction comprend des triangles disposés de part et d'autre de la roue avant, dont les extrémités inférieures sont fixées au moyeu de façon à définir un angle de chasse donné et dont les extrémités supérieures sont reliées à l'axe de la colonne de direction par deux compas articulés entre eux au moyen d'un axe, les extrémités libres des compas étant elles-mêmes articulées par rapport aux triangles de la fourche et par rapport audit axe de la colonne de direction.

De plus, les articulations des compas sur la fourche et sur l'axe de la colonne de direction sont du type à la cardan.

Selon un mode de réalisation particulier, la motocyclette selon l'invention comprend une jambe de force articulée à ses extrémités et disposée entre la fourche et le bâti rigide de façon à constituer un quadrilatère déformable avec le bras oscillant avant et à permettre le passage des moyens d'entraînement de la roue avant.

De plus, la jambe de force comprend des moyens de réglage en longueur de façon à permettre le réglage de l'angle de chasse.

L'invention sera mieux comprise à la lecture de la description détaillée qui va suivre de différents modes de réalisation selon l'invention, ceci en regard des figures annexées parmi lesquelles :

– la figure 1 représente une vue en élévation latérale d'une motocyclette selon l'invention,
– la figure 2 est une vue latérale détaillée des moyens de réglage de la chasse et de l'angle de chasse selon l'invention,
– la figure 3 représente à sa partie supérieure une vue en coupe de la figure 2 selon la ligne 3-3 et la partie inférieure de cette même figure représente une vue de dessus selon la ligne A-A, et
– la figure 4 représente une vue de face schématique d'une variante de la direction représentée à la figure 1.

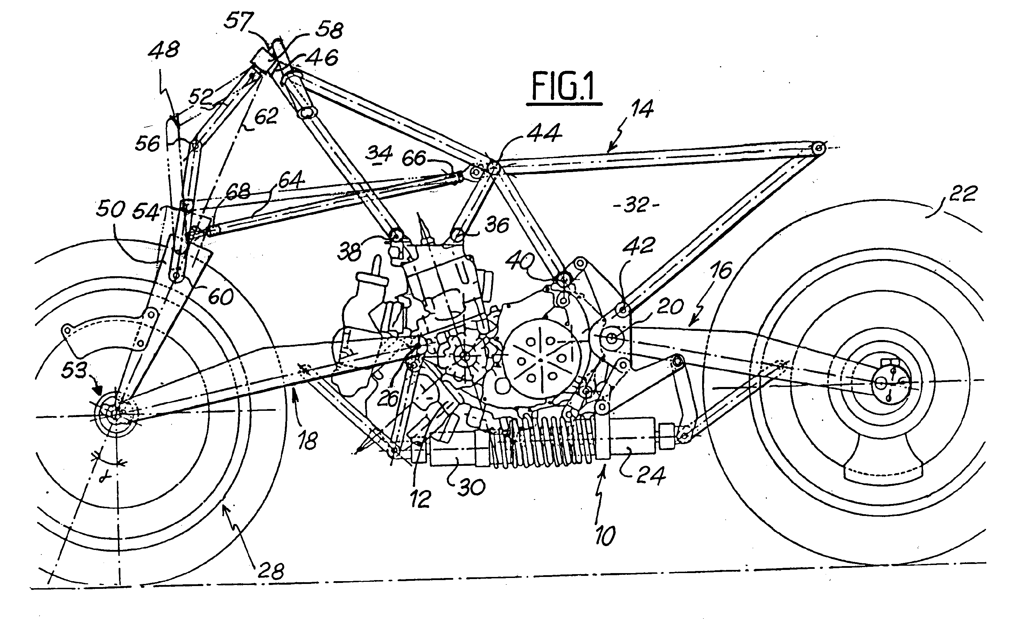

Sur la figure 1 on a représenté une motocyclette du type motocyclette à deux roues 10 comportant un moteur 12 auquel est relié un bâti rigide 14 et deux bras oscillants, double, arrière 16 et avant 18. Le bras oscillant arrière pivote autour de l'axe 20 solidaire du moteur tandis que son extrémité libre reçoit la roue arrière 22, un dispositif d'amortissement 24 étant disposé entre le bras oscillant 16 et le moteur 12.

Le bras oscillant 18 est relié au moteur 12 par un axe d'articulation 26 autour duquel il peut pivoter tandis que son extrémité libre reçoit la roue avant 28 et un dispositif amortisseur 30 est disposé entre ce bras oscillant et le moteur 12.

Le bâti rigide 14 comprend deux trapèzes 32 et 34 dont les côtés sont constitués de tubes reliés à leurs extrémités pour former les sommets des trapèzes. Deux sommets 36 et 38 du trapèze 34 et deux sommets 40, 42 du trapèze 32 sont reliés directement au moteur. Par ailleurs, ces deux trapèzes 32 et 34 ont un sommet commun 44 situé sensiblement dans le plan vertical médian du moteur perpendiculairement au sens de déplacement, le sommet libre 46 du trapèze 34 recevant une direction 48. Cette direction 48 comporte une fourche 50 reliée au moyeu 52 de la roue avant et deux compas 52 et 54 articulés entre eux par l'une de leurs extrémités autour d'un même axe 56. Par ailleurs, le compas supérieur 52 est relié par son autre extrémité à l'axe 57 de la colonne de direction 58. Quant à l'autre extrémité du compas 54 elle est articulée par rapport à la fourche 50 autour d'un axe 60. L'axe de rotation de la colonne de direction 48 est symbolisé par le trait mixte 62.

Une jambe de force 64 contrôle le déplacement de la fourche 50 par rapport au bâti fixe 14. Elle est articulée sur la fourche 50 et sur le bâti 14, plus particulièrement au niveau du sommet 44 commun aux deux trapèzes 32 et 34. Cette jambe de force 64 est réglable en longueur au moyen de deux inserts 66 et 68, placés aux extrémités, filetés avec des pas inversés de façon que la rotation du tube constituant la jambe de force 64 provoque l'extension ou le raccourcissement de cette jambe de force.

Le quadrilatère constitué par la fourche 50, la jambe de force 64 et le bras oscillant 18 et le bloc moteur est déformable.

On constate que le bâti rigide 14 ne subit aucun déplacement par rapport au moteur. La fourche 50 se déplace en translation parallèlement à l'axe 62 tandis que les compas 52 et 54 font entre eux un angle variable suivant la position du moyeu 53 par rapport à la colonne de direction 58. Le débattement est limité par le dispositif amortisseur 30 qui limite le déplacement du bras oscillant 18. Le cadre est complété par un dispositif de manoeuvre directionnelle, en l'occurrence un guidon 70 fixé sur l'axe 57 de la colonne de direction 58.

Le cadre et la colonne de direction selon l'invention présentent l'avantage d'autoriser un réglage de l'angle de chasse initial par modification de la longueur de la jambe de force 64. Ainsi en fonction de la taille des obstacles à franchir ou de l'état de la surface sur laquelle roule le véhicule, il est utile de modifier cet angle au lieu de conserver un angle fixe déterminé par une moyenne de la taille des obstacles. Sur une surface accidentée on augmente cet angle tandis que sur une surface lisse on le diminue, de façon que la réaction de l'obstacle sur la roue se situe sensiblement dans l'axe de la fourche 50.

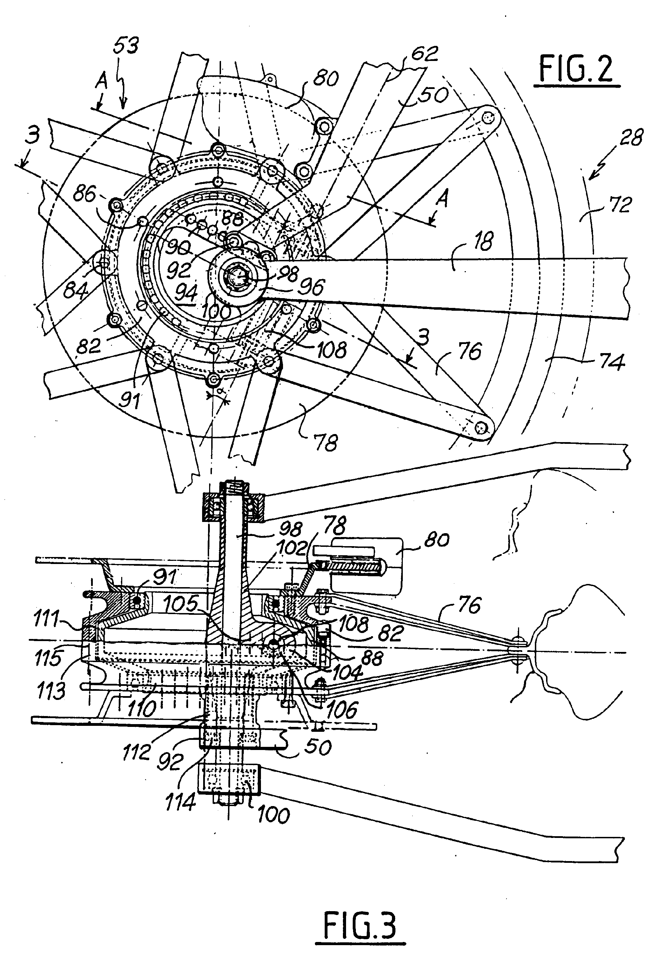

A la figure 2 on a représenté plus en détail le moyeu 52 et la liaison de ce moyeu à la colonne de direction et plus particulièrement à la fourche 50 de celle-ci. La référence 28 concerne la roue avant et elle est complétée par les références 72 concernant le pneu, 74 concernant la jante et 76 concernant les rayons "bâtons". Le disque du frein à disque est référencé 78 tandis que son étrier porte la référence 80. Les rayons 76 sont fixés au moyeu extérieur 82 par des boulons 84 tandis que le disque du frein à disque est fixé sur ce même moyeux extérieur 82 par des boulons 86. Le moyeu extérieur 82 peut tourner autour du moyeu fixe 88 par l'intermédiaire de roulements à billes latéraux 91. Le moyeu intérieur comporte également une série d'alésages 90 dans lesquels vient se fixer l'extrémité inférieure 92 de la fourche 50.

Sur cette même figure l'axe de rotation de la roue et des deux moyeux concentriques est indiqué en C. D'autre part, ce moyeu intérieur 88 comporte une lumière 94. L'extrémité 96 des bras oscillants 18 porte un axe de pivotement 98 orienté parallèlement à l'axe de rotation de la roue. Cet axe de pivotement 98 est mobile en rotation sur lui-même par des roulements 100.

Lorsque le bras oscillant 18 se déplace en rotation, les roulements 100 permettent la modification de l'angle que font la fourche 50 et ce même bras oscillant. Ce sont ces roulements 100 qui complètent le quatrième point déformable du quadrilatère déformable.

En se reportant à la partie supérieure de la figure 3, on a représenté un pivot 102 disposé de façon coaxiale sur l'axe 98. Ce pivot comporte une partie excentrée 104 alésée en 106. Dans cet alésage on a introduit un axe de direction 108 aux extrémités duquel est fixé le moyeu intérieur 88 suivant une droite parallèle à un de ses diamètres. Le moyeu fixe comporte ainsi plusieurs alésages traversants coaxiaux 105 disposés en vis à vis selon des droites parallèles à un même diamètre de façon que l'on puisse rapprocher l'axe de pivotement 108 du centre C de rotation de la roue.

Cette distance permet de faire varier la chasse, c'est-à-dire la distance au sol qui sépare le point d'intersection de la droite confondue avec l'axe de direction et le point de contact du pneu avec le sol.

On constate donc que l'angle de chasse peut être modifié indépendamment de la chasse et que ces deux paramètres peuvent être modifiés simultanément de façon que l'angle de chasse varie en conservant une chasse constante.

Aussi il est possible de déplacer simultanément l'extrémité inférieure 92 de la fourche 50 dans les alésages 90 pour corriger l'angle de chasse.

Sur la partie inférieure de la figure 3 on a indiqué en 92 l'extrémité inférieure de la fourche 50 et l'on constate que compte tenu du dispositif de freinage, il est nécessaire de disposer entre le flanc 110 du moyeu fixe 88 et cette extrémité 92 une entretoise 112, l'ensemble étant fixé par des vis telles que 114 sur ce même flanc 110 du moyeu fixe 88.

Dans le but de faciliter le montage du moyeu extérieur 82 sur les roulements à billes 91, ce moyeu est constitué de flasques annulaires reliés entre eux par des vis.

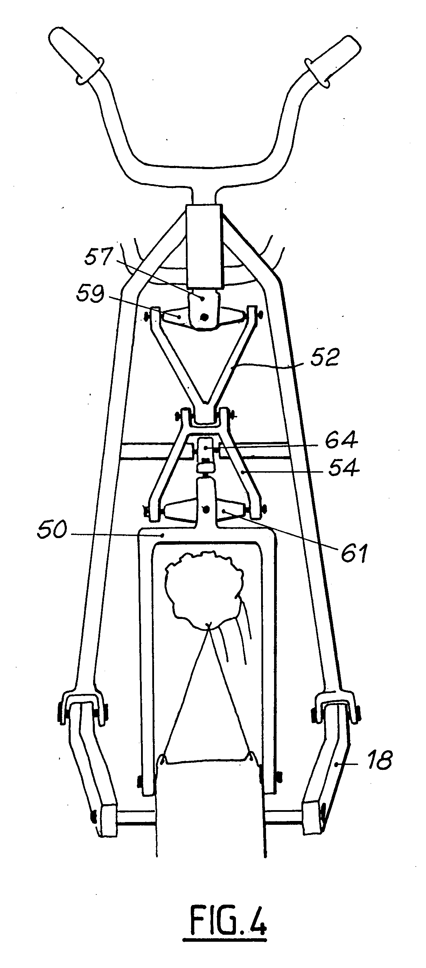

A la figure 4, on a représenté un mode de réalisation de l'ensemble de direction de la figure 1, vu de face de façon à faire apparaître les liaisons des compas 52 et 54 au bâti et entre eux, ainsi que la fourche de direction et la jambe de force. On peut ainsi disposer des articulations à la cardan 59, 61 pour réaliser les liaisons des compas à l'axe 57 de la colonne de direction et à la fourche 50. L'orientation en direction de la roue reste facile dans toutes les positions du bras oscillant par rapport au cadre.

## Revendications

1. Motocyclette à deux roues avant et arrière montées chacune sur un bras oscillant (18, 16), notamment à deux rous motrices, comportant un bâti rigide (14) formant cadre, supportant un ensemble de direction (48) avec une colonne de direction (58), et un moteur d'entraînement (12) ainsi qu'une fourche avant (50) caractérisée en ce qu'elle comprend un moyeu (53) directionnel comportant un moyeu extérieur (82) et un moyeu intérieur (88) dont les flancs (110) reçoivent l'extrémité inférieure de la fourche (50), ce moyeu intérieur étant orientable autour d'un axe de direction (108) parallèle à un des diamètres de ce moyeu et porté par un pivot (104) décentré et solidaire d'un axe de pivotement (98) horizontal orienté perpendiculairement à la direction de déplacement, passant à travers une lumière traversante (94) ménagée dans ce moyeu intérieur, cet axe de pivotement étant monté à rotation aux extrémités du bras oscillant avant (18).

2. Motocyclette selon la revendication 1, caractérisée en ce que le moyeu intérieur (88) est muni d'au moins deux alésages (105, 106) traversants, parallèles à un des diamètres de ce moyeu pour que l'axe de direction (108) prenne des positions variables par rapport à l'axe de rotation (C) de la roue de façon à régler la chasse.

3. Motocyclette selon la revendication 1 ou 2, caractérisée en ce que l'axe de pivotement (98) est monté à rotation par rapport au bras oscillant (18) avant grâce à des roulements (100).

4. Motocyclette selon l'une quelconque des revendications précédentes, caractérisée en ce que les flancs (110) du moyeu intérieur (88) comportent une série d'alésages (90) destinés à recevoir l'extrémité (92) de la fourche (50), l'axe (62) de la colonne de direction (58) et l'axe de direction (108) étant sensiblement parallèles.

5. Motocyclette selon l'une quelconque des revendications précédentes, caractérisée en ce que le moyeu intérieur (88) porte les cages intérieures de deux roulements à billes (91) annulaires et les cages extérieures de ces roulements portent le moyeu extérieur (82).

6. Motocyclette selon l'une quelconque des revendications précédentes, caractérisée en ce que le moyeu extérieur (82) est constitué de deux flasques annulaires (111, 113) symétriques par rapport au plan vertical passant par l'axe de direction (108) et par l'axe de rotation (C) de la roue, ces deux flasques étant reliés entre eux par des vis (115).

7. Motocyclette selon l'une quelconque des revendications précédentes, caractérisée en ce que le bâti rigide (14) comprend des tubes agencés pour former deux trapèzes avant (34) et arrière (32) coopérant entre eux par un sommet (44), deux des sommets de chaque trapèze (36, 38 ; 40, 42) étant fixés au moteur, le dernier sommet (46) du trapèze avant supportant la colonne de direction (58).

8. Motocyclette selon l'une quelconque des revendications précédentes, caractérisée en ce que la fourche (50) de la colonne de direction (48) comprend des triangles disposés de part et d'autre de la roue avant, dont les extrémités inférieures sont fixées au moyeu de façon à définir un angle de chasse donné et dont les extrémités supérieures sont reliées à l'axe (57) de la colonne de direction (58) par deux compas articulés entre eux au moyen d'un axe (56), les extrémités libres des compas étant elles-mêmes articulées par rapport aux triangles de la fourche (50) et par rapport audit axe (57) de la colonne de direction (58).

9. Motocyclette selon la revendication 8, caractérisée en ce que les articulations des compas sur la fourche (50) et sur l'axe (57) de la colonne de direction (58) sont du type à la cardan.

10. Motocyclette selon l'une quelconque des revendications précédentes, caractérisée en ce qu'elle comprend une jambe de force (64) articulée à ses extrémités et disposée entre la fourche (50) et le bâti rigide (14) de façon à constituer un quadrilatère déformable avec le bras oscillant avant et à permettre le passage des moyens d'entraînement de la roue avant.

11. Motocyclette selon la revendication 10, caractérisée en ce que la jambe de force (64) comprend des moyens (66, 68) de réglage en longueur de façon à permettre le réglage de l'angle de chasse.

**Patentansprüche**

1. Motorrad mit zwei Vorder- und Hinterrädern, die jeweils an einem schwenkbaren Arm (18, 16) montiert sind, insbesondere mit zwei Antriebsrädern, mit einem den Rahmen bildenden starren Gestell (14), das eine Lenkgruppe (48) mit einer Lenksäule (58) und einen Antriebsmotor (12) sowie eine vordere Gabel (50) trägt, dadurch **gekennzeichnet**, daß es eine lenkbare Nabe (53) besitzt, die eine äußere Nabe (82) und eine innere Nabe (88) aufweist, deren Flanken ( 110) das untere Ende der Gabel (50) aufnehmen, wobei diese innere Nabe um eine Lenkachse (108) schwenkbar ist, die parallel zu einem der Durchmesser dieser Nabe verläuft und an einem Gelenkrapfen (104) gehalten ist, der exzentrisch an einer waagerecht, rechtwinklig zur Fortbewegungsrichtung orientierten Schwenkachse (98) sitzt, die durch eine in der inneren Nabe ausgebildete durchgehende Öffnung (94) verlauft und drehbar an den Enden des vorderen Schwenkarms (18) montiert ist.

2. Motorrad nach Anspruch 1, dadurch **gekennzeichnet**, daß die innere Nabe (88) mit wenigstens zwei parallel zu einem der Durchmesser der Nabe verlaufenden Durchbohrungen ( 105, 106) versehen ist, damit die Lenkachse (108) variable Positionen in bezug auf die Drehachse (C) des Rades einnehmen kann, wodurch der Nachlauf eingestellt werden kann.

3. Motorrad nach Anspruch 1 oder 2, dadurch **gekennzeichnet**, daß die Schwenkachse (98) mit Hilfe von Wälzlagern (100) drehbar an dem Schwenkarm ( 18) montiert ist.

4. Motorrad nach einem der vorstehenden Ansprüche, dadurch **gekennzeichnet**, daß die Flanken (110) der inneren Nabe (88) eine Folge von Bohrungen (90) aufweisen, die zur Aufnahme des Endes (92) der Gabel (50) dienen, wobei die Achse (62) der Lenksäule (58) und die Lenkachse (108) im wesentlichen parallel sind.

5. Motorrad nach einem der vorstehende Ansprüche, dadurch **gekennzeichnet**, daß die innere Nabe (88) die Innenringe von zwei Kugellagern (91) trägt, und daß die Außenringe dieser Kugellager die äußere Nabe (82) tragen.

6. Motorrad nach einem der vorstehenden Ansprüche, dadurch **gekennzeichnet**, daß die äußere Nabe (82) durch zwei ringförmige Flansche (111, 113) gebildet wird, die symmetrisch in bezug auf die durch die Lenkachse (108) verlaufende vertikale Ebene und auf die Drehachse (C) des Rades angeordnet und durch Schrauben (115) miteinander verbunden sind.

7. Motorrad nach einem der vorstehenden Ansprüche, dadurch **gekennzeichnet**, daß das starre Gestell (14) Rohre aufweist, die so angeordnet sind, daß zwei vordere (34) und hintere (32) Trapeze gebildet werden, die über eine Ecke (44) miteinander gekoppelt sind, wobei zwei Ecken jedes Trapezes (36, 38; 40, 42) am Motor befestigt sind und die letzte Ecke (46) des vorderen Trapezes die Lenksäule (58) trägt.

8. Motorrad nach einem der vorstehenden Ansprüche, dadurch **gekennzeichnet**, daß die Gabel (50) der Lenkgruppe (48) Dreiecke aufweist, die beiderseits des Vorderrades angeordnet sind und deren untere Enden so an der Nabe befestigt sind, daß ein bestimmter Nachlaufwinkel definiert wird, während die oberen Enden mit der Achse (57) der Lenlsäule (58) über zweiGelenkgabeln verbunden sind, die durch eine Achse (56) gelenkig miteinander verbunden sind, wobei die freien Enden der Gelenkgabeln ihrerseits gelenkig mit den Dreiecken der Gabel (50) und mit der Achse (57) der Lenksäule (58) verbunden sind.

9. Motorrad nach Anspruch 8, dadurch **gekennzeichnet**, daß die Gelenke der Gelenkgabeln an der Gabel (50) und an der Achse (57) der Lenksäule (58) Kardangelenke sind.

10. Motorrad nach einem der vorstehenden Ansprüche, dadurch **gekennzeichnet**, daß es eine Strebe (64) aufweist, die an ihren Enden gelenkig befestigt ist und derart zwischen der Gabel (50) und dem starren Gestell (40) angeordnet ist, daß ein Gelenkviereck mit dem vorderen Schwenkarm gebildet und der Durchtritt von Antriebsmitteln für das Vorderrad ermöglicht wird.

11. Motorrad nach Anspruch 10, dadurch **gekennzeichnet**, daß die Strebe (64) Mittel (66, 68) zur Längenverstellung aufweist, derart, daß der Nachlaufwinkel einstellbar ist.


**Claims**

1. Motorcycle with a front and a rear wheel each mounted on a pivoting arm (18, 16) in particular with two drive wheels, comprising a rigid supporting structure (14) forming a frame supporting a steering assembly (48) with a steering column (58) and a drive motor (12) as well as a front fork (50), characterised in that it comprises a steering hub (53) comprising an outer hub (82) and an inner hub (88) of which the sides (110) accommodate the lower end of the fork (50), it being possible for this inner hub to be oriented about a steering shaft (108) parallel to one of the diameters of this hub and supported by a pivot (104) which is off-centre and integral with a horizontal pivot shaft (98) directed perpendicular to the direction of movement, passing through a continuous gap (94) provided in this inner hub, this pivot shaft being rotatably mounted at the ends of the front pivoting arm (18).

2. Motorcycle according to Claim 1, characterised in that the inner hub (88) is provided with at least two continuous bores (105, 106) which are parallel to one of the diameters of this hub in order that the steering shaft (108) can adopt positions which can be varied relative to the axis of rotation (C) of the wheel so as to adjust the castor.

3. Motorcycle according to Claim 1 or 2, characterised in that the pivot shaft (98) is mounted so as to rotate relative to the front pivoting arm (18) by means of bearings (100).

4. Motor cycle according to any one of the preceding claims, characterised in that the sides (110) of the inner hub (88) comprise a series of bores (90) for accommodating the end (92) of the fork (50), the axis (62) of the steering column (58) and the steering shaft (108) being substantially parallel.

5. Motorcycle according to any one of the preceding claims, characterised in that the inner hub (88) supports the inner cages of two annular ball-bearings (91) and the outer cages of these bearings support the outer hub (82).

6. Motorcycle according to any one of the preceding claims, characterised in that the outer hub (82) comprises two annular end shields (111, 113) which are symmetrical relative to the vertical plane passing through the steering shaft (108) and through the rotational axis (C) of the wheel, these two end shields being connected to each other by bolts (115).

7. Motorcycle according to any one of the preceding claims, characterised in that the rigid supporting structure (14) comprises tubes arranged so as to form two trapezoids, one (34) at the front and one (32) at the rear, cooperating with each other at an apex (44), two of the apexes of each trapezoid (36, 38; 40, 42) being secured to the engine, the third apex (46) of the front trapezoid supporting the steering column (58).

8. Motorcycle according to any one of the preceding claims, characterised in that the fork (50) of the steering column (48) comprises triangles which are disposed on either side of the front wheel, of which the lower ends are secured to the hub so as to define a given castor angle, and of which the upper ends are connected to the shaft (57) of the steering column (58) by two support brackets hinged to one another by means of a shaft (56), the free ends of the support brackets being themselves articulated relative to the triangles of the fork (50) and relative to the said shaft (57) of the steering column (58).

9. Motorcycle according to Claim 8, characterised in that the hinges of the support brackets on the fork (50) and on the shaft (57) of the steering column (58) are of the universal joint type.

10. Motorcycle according to any one of the preceding claims, characterised in that it comprises a strut (64) hinged at its ends and disposed between the fork (50) and the rigid supporting structure (14) so as to form a quadrilateral which can be deformed with the front pivoting arm and so as to enable the drive means of the front wheel to pass through.

11. Motorcycle according to Claim 10, characterised in that the strut (64) comprises longitudinal adjustment means (66, 68) enabling the castor angle to be adjusted.

## FIG.1

FIG.2

FIG.3

FIG.4